# EUROPÄISCHE PATENTSCHRIFT

(11) **EP 2 072 957 B1**
(45) Veröffentlichungstag und Bekanntmachung des Hinweises auf die Patenterteilung: **11.12.2019**
(21) Anmeldenummer: 08020144.5
(22) Anmeldetag: 19.11.2008
(51) Int. Cl.: G01D 4/00, H04Q 9/00

(54) **Ubertragungsverfahren der gespeicherten Messdaten von Verbrauchsmessgeräten, insbesondere Heizkostenverteilern**
Transfer procedure for saved measurement data from consumption meters, especially heating cost distributors
Procédé de transmission des données de mesure mémorisées à partir d'appareils de mesure de consommation, notamment de répartiteurs de coûts de chauffage

(30) Priorität: 21.12.2007 DE 102007062077
(43) Veröffentlichungstag der Anmeldung: 24.06.2009
(73) Patentinhaber: QUNDIS GmbH, 99098 Erfurt (DE)
(72) Erfinder: Schneider, Christoph, 78112 St. Georgen (DE)
(74) Vertreter: Liedtke, Klaus

(56) Entgegenhaltungen:
- WO-A2-2007/030826
- US-A1- 2007 057 814

## Beschreibung

Die Erfindung betrifft ein Verfahren zum Übertragen der gespeicherten Daten eines batteriebetriebenen elektronischen Verbrauchsmeßgerätes an einen Datensammler per Funk gemäß dem Oberbegriff des Anspruchs 1.

Bei der Erfindung geht es allgemein um elektronische Verbrauchsmeßgeräte im häuslichen Bereich. Ein Anwendungsgebiet sind die sogenannten Heizkostenverteiler. Diese Heizkostenverteiler haben die Aufgabe, die abgegebene Wärmemenge eines Heizkörpers zu messen, um diese dann bei einem Mehrparteiengebäude anteilsmäßig umlegen zu können. Selbstverständlich kann das erfindungsgemäße Verfahren auch bei anderen Verbrauchsmeßgeräten eingesetzt werden, beispielsweise bei Wasserzählern.

Die Arbeitsweise dieser Verbrauchsmeßgeräte besteht darin, daß die gemessenen Daten im Verbrauchsmeßgerät zunächst gespeichert werden. Von Zeit zu Zeit werden dann die gespeicherten Daten per Funk an einen mobilen Datensammler gesendet. Dabei ist es bekannt, daß das Verbrauchsmeßgerät regelmäßig für eine kurze Zeit auf Empfang geht. Der Datensammler sendet dauerhaft ein Signal aus, auf welches das Verbrauchsmeßgerät reagieren kann. Auf diese Weise wird eine bidirektionale Kommunikation aufgebaut, an deren Ende dann die gespeicherten Daten des Verbrauchsmeßgerätes an den Datensammler gesendet werden.

Ein wichtiger Parameter bei einem derartigen mobilen Auslesesystem ist die Verweildauer der Ableseperson in der Liegenschaft. In Verbindung damit steht eine rasche Rückmeldung des Systems über die schon ausgelesene Menge an Meßgeräten.

Das Problem bei derartigen Übertragungsverfahren stellt die benötigte Energie bei den elektronischen Verbrauchsmeßgeräten für die Funkübertragung der Daten dar. Denn diese Verbrauchsmeßgeräte sind mit einer Batterie ausgestattet, welche nur eine vorgegebene, bestimmte Gesamtenergie besitzen. Ist die Batterie erschöpft, können zum einen keine Daten mehr gemessen und zum anderen bereits gespeicherte Daten nicht mehr an den mobilen Datensammler gesendet werden. Im Hinblick auf die vorgegebene Lebensdauer des Verbrauchsmeßgerätes sowie im Hinblick auf die Kapazität der Batterie muß mit dieser Batteriekapazität extrem gehaushaltet werden.

In der WO 2007/030826 A2 wird ein automatisches Zählerauslesesystem mit einem Lesegerät und einer Mehrzahl von Funkzählern beschrieben. Die Funkzähler werden die meiste Zeit in einem Niedrigenergiemodus betrieben, in welchem sie nicht mit dem Lesegerät kommunizieren. Dieser Niedrigenergiemodus wird verlassen, um eine Nachricht mit einer Identifikation des jeweiligen Funkzählers zu senden. Danach schalten die Funkzähler in einen Empfangsmodus, um Anweisungen vom Lesegerät zu empfangen.

Aus der US 2007/0057814 A1 ist ein drahtloses Zählerauslesesystem bekannt. Dabei wird mittels einer Kamera ein Bild eines Zählerstandes erfasst und über Funk an eine Empfängereinheit übertragen. Von dieser Empfängereinheit erfolgt dann eine Übertragung zu einer Zentrale.

Der Erfindung liegt die **Aufgabe** zugrunde, ein Verfahren zum Übertragen der gespeicherten Daten eines batteriebetriebenen elektrischen Verbrauchsmeßgerätes an einen Datensammler per Funk zu schaffen, welches zum einen nur wenig elektrische Energie benötigt und welches zum anderen aber auch gewährleistet, daß der Datensammler aus wirtschaftlichen Gründen in einer kurzen Zeitspanne die Daten übertragen bekommen kann.

Die technische **Lösung** ist gekennzeichnet durch die Merkmale des Anspruchs 1.

Die Grundidee des erfindungsgemäßen Übertragungsverfahrens liegt im Aufbau einer bidirektionalen Kommunikation zwischen mindestens einem Verbrauchsmeßgerät und mindestens einem Datensammler. Der Datensammler kann dabei stationär in einem Gebäude angeordnet, aber auch mobil sein, indem eine Person mit dem Datensammler eine Liegenschaft betritt, um dort die gespeicherten Daten der Verbrauchsmeßgeräte abzurufen. Indem sich das Verbrauchsmeßgerät die überwiegende Zeit in der Ruhephase befindet und dort zwar die Daten mißt und diese speichert und nur von Zeit zu Zeit versucht, eine bidirektionale Kommunikation mit dem Datensammler aufzubauen, wird dadurch Energie eingespart. Erst wenn die Kommunikation mit dem Datensammler hergestellt ist, sendet das Verbrauchsmeßgerät seine gespeicherten Daten. Außer den gespeicherten Verbrauchsmeßdaten können aber auch zwischen dem Verbrauchsmeßgerät und dem Datensammler bidirektional auch andere Daten beliebiger Art zwischen diesen beiden Geräten ausgetauscht werden, beispielsweise Parametrisierungsdaten.

Bei einer funktechnischen Realisierung ist das Verbrauchsmeßgerät mit einer Sendeeinrichtung ausgestattet und sendet mit einer vorgegebenen Häufigkeit ein kurzes Funksignal aus. Auf dieses kurze Funksignal kann der Datensammler, welcher sich gerade in der Nähe befindet, antworten und die gespeicherten Meßdaten des Verbrauchsmeßgerätes anfordern. Damit ist eine kontinuierliche bidirektionale Auslesung der Meßdaten möglich. Es wird dabei davon ausgegangen, daß zwischen den Verbrauchsmeßgeräten einer Liegenschaft keine absolute zeitliche Synchronisation besteht. Die technische Realisierung sieht vom Grundgedanken her vor, daß das Verbrauchsmeßgerät in zeitlichen Abständen regelmäßig ein sehr kurzes Funksignal, d. h. einen Ruf sendet und danach schnellstmöglich kurz auf Empfang geht. Der Abstand der Rufe des Verbrauchsmeßgerätes wird bestimmt durch die zur Verfügung stehende Energie. Denn je öfter das Verbrauchsmeßgerät seine kurzen Funksignale aussendet, desto mehr Energie wird benötigt. Der Datensammler hingegen ist dauerhaft (oder zeitweise) auf Empfang (wenn er nicht gerade sendet) und kann so direkt auf den Ruf eines Verbrauchsmeßgerätes reagieren, indem er ein Bestätigungssignal an das Verbrauchsmeßgerät sendet. Dieses Verbrauchsmeßgerät empfängt dieses Bestätigungssignal und weiß nunmehr, daß es die gespeicherten Daten an den Datensammler senden kann. Wenn das Verbrauchsmeßgerät regelmäßig einen kurzen Ruf mit dem kurzen Funksignal sendet, ist darunter das minimalst mögliche Telegramm gemeint, bevor es dann auf Empfang geht. Die Auslesezeit hängt dabei direkt von den zeitlichen Abständen ab, in denen die Verbrauchsmeßgeräte aus ihrer Ruhephase heraus die kurzen Funksignale an den Datensammler senden. Der Auslesevorgang läuft so lange, bis alle vorgegebenen Verbrauchsmeßgeräte der Liegenschaft bzw. eine bestimmte Anzahl von Verbrauchsmeßgeräten empfangen worden sind. Nach einer vorgegebenen Zeitdauer kann die Ableseperson aufgefordert werden, seine Position zu wechseln, wenn also innerhalb eines vorgegebenen Zeitintervalls kein neues Verbrauchsmeßgerät empfangen worden ist. Denn dies kann mit Empfangsschwierigkeiten aufgrund der örtlichen Verhältnisse zusammenhängen. Bestehende Ablesevorgänge laufen jedoch trotz des Positionswechsels dauerhaft weiter. Dies hat somit den Vorteil, daß auch während eines Positionswechsels innerhalb der Liegenschaft die Verbrauchsmeßgeräte empfangen werden können. Die Gesamtauslesezeit für die Verbrauchsmeßgeräte einer Liegenschaft (einzelne Auslesezyklen an verschiedenen Positionen) wird dadurch verringert.

Die Weiterbildung gemäß Anspruch 2 schlägt ein Verfahren vor, mit welchem der Datensammler festlegt, welche Daten konkret er vom Verbrauchsmeßgerät abrufen will.

Eine erfindungsgemäße Weiterbildung, welche die Energieeinsparung weiter optimiert, sieht das Folgende vor: Das minimalst mögliche Telegramm sieht zunächst eine sogenannte Präambel vor. Dies ist eine Bitfolge, welche der Datensammler als "ernsthaftes Signal" erkennt. An diese Präambel schließt sich ein sogenanntes Syncword an. Dies ist ein Signal, aus dem der Datensammler erkennt, daß dieses von einem Verbrauchsmeßgerät aus einer Gruppe von Verbrauchsmeßgeräten stammt. Das spezielle Verbrauchsmeßgerät ist damit jedoch noch nicht identifiziert. Auf dieses Syncword hin, welches der Datensammler empfängt, kann dieser direkt antworten und das Bestätigungssignal für dieses Verbrauchsmeßgerät aussenden. Erst dann sendet das Verbrauchsmeßgerät seine Identifikation zusammen mit den Daten.

Die Weiterbildung gemäß Anspruch 3 schlägt vor, daß unterschiedliche Sende- und Empfangsfrequenzen verwendet werden. Durch derartige unterschiedliche Frequenzbänder für "Ruf" und "Datenaustausch" werden Störungen verringert. Um diese Störungen der Datenübertragung zu minimieren, arbeitet das System vorzugsweise mit zwei unterschiedlichen Kanälen. Auf Kanal 1 senden die Verbrauchsmeßgeräte ihren Ruf und gehen danach auf Kanal 2 auf Empfang, um die mögliche Antwort des Datensammlers zu hören. Die Übertragung der Daten findet dann auf Kanal 2 statt und kann somit durch die Rufe anderer Verbrauchsmeßgeräte auf Kanal 1 nicht gestört werden. Die Nutzung dieser unterschiedlichen Frequenzbereiche hat somit - wie ausgeführt - den Vorteil, daß die Rufe der Verbrauchsmeßgeräte relativ wenigen Störungen durch Fremdgeräte ausgesetzt sind. Auf Seiten des Datensammlers liegt der Vorteil bei bestimmten Frequenzbändern in der Nutzung einer weitverbreiteten Frequenz, für die viele optimierte Bauteile zur Verfügung stehen. Es ist dabei unschädlich, daß der Datensammler während der Datenübertragung die Rufe anderer Verbrauchsmeßgeräte nicht hört, weil diese anderen Verbrauchsmeßgeräte zu einem späteren Zeitpunkt wiederum periodisch Rufe aussenden.

Die Weiterbildung gemäß Anspruch 4, wonach jedes Verbrauchsmeßgerät nach erfolgreicher Datenübertragung für eine bestimmte Zeit gewissermaßen schlafen geht, besteht darin, daß mögliche Rufkollisionen bei einer Vielzahl von Verbrauchsmeßgeräten immer weniger werden und somit die Empfangsbereitschaft des Datensammlers nicht unnötigerweise blockiert wird. Dadurch bleibt die Verweildauer an einer Position in der Liegenschaft auch bei einer hohen Anzahl von Verbrauchsmeßgeräten bei nur wenigen Rufzyklen. Damit verbunden ist eine entsprechende Energieeinsparung.

Die Weiterbildung gemäß Anspruch 5 besteht darin, daß das Verbrauchsmeßgerät nach dem Senden seines kurzen Funksignals zuerst den Leistungspegel des Eingangssignals bewertet, bevor es auf die Antwort des Datensammlers wartet. Liegt der Leistungspegel im Empfangsfenster unterhalb einer vorgegebenen Grenze, wird der Empfang direkt wieder abgeschaltet. Ist die Mindestleistung jedoch vorhanden, bleibt der Empfang aufrechterhalten, und zwar bis entweder die maximale Zeitdauer erreicht ist oder ein Syncword eines Verbrauchsmeßgerätes empfangen wird.

Die Weiterbildung gemäß Anspruch 6 hat den Vorteil, daß dadurch der sich ändernde Rauschpegel der Umgebung und/oder der Einfluß von Störungen durch Fremdgeräte minimiert wird.

Die Weiterbildung gemäß Anspruch 7 hat den Vorteil, daß nach der Montage des Verbrauchsmeßgerätes ein schnellerer Kommunikationsaufbau erreicht wird.

Die Weiterbildung gemäß Anspruch 8 hat den Vorteil einer weiteren Energieeinsparung.

Die Weiterbildung gemäß Anspruch 9 schließlich sieht eine Optimierung der Schnelligkeit der Übersendung der Daten vor. Je besser der Empfang ist, desto schneller können die Daten sicher übersandt werden. Umgekehrt, wenn der Empfang schlecht ist, werden die Daten langsamer übersandt. Je schneller jedoch die Daten übersandt werden, desto mehr wird an Energie eingespart. Vorzugsweise erfolgt die Anpassung der Schnelligkeit der Datenübertragung dynamisch, d.h. selbständig durch das Gerät. Selbstverständlich ist es auch denkbar, eine manuelle Einstellung vorzunehmen.

## Patentansprüche

1. Verfahren zum Übertragen der gespeicherten Daten eines batteriebetriebenen elektronischen Verbrauchsmeßgerätes an einen Datensammler per Funk,
bei dem sich der Datensammler zeitweise oder dauerhaft auf Empfang befindet und
bei dem zum Senden sowie zum Empfangen der gespeicherten Daten und/oder anderer Daten eine bidirektionalen Funkverbindung zwischen dem Verbrauchsmeßgerät und dem Datensammler verwendet wird,
bei dem sich das Verbrauchsmeßgerät die überwiegende Zeit in einer Ruhephase befindet, in welcher es zwar Daten mißt und diese speichert, sich jedoch nicht in Sendebereitschaft befindet,
bei dem das Verbrauchsmeßgerät aus dieser Ruhephase heraus periodisch in Sendebereitschaft übergeht und versucht, eine bidirektionale Funkverbindung mit dem Datensammler aufzubauen,
bei dem bei Erfolg anschließend die gespeicherten Daten und/oder andere Daten vollständig oder teilweise an den Datensammler gesendet oder Daten vom Datensammler empfangen werden und
bei dem schließlich auf jeden Fall sowohl im Erfolgsfall als auch im Nichterfolgsfall das Verbrauchsmeßgerät wieder in die Ruhephase zurückkehrt,
wobei das Verbrauchsmeßgerät in zeitlichen Abständen aus der Ruhephase heraus ein kurzes Funksignal aussendet und sofort danach für eine vorgegebene Zeitdauer zum Aufbau der bidirektionalen Kommunikation mit dem Datensammler auf Empfang geht, wobei anschließend für den Fall, daß der Datensammler das kurze Funksignal des Verbrauchsmeßgerätes empfängt, dieser Datensammler an das Verbrauchsmeßgerät ein Bestätigungssignal aussendet,
wobei schließlich nach dem Empfang dieses Bestätigungsignals durch das Verbrauchsmeßgerät dieses die gespeicherten Daten und/oder andere Daten vollständig oder teilweise an den Datensammler sendet und dieser die Daten empfängt, und
wobei das kurze Funksignal des Verbrauchsmeßgerätes eine Übertragungspräambel sowie ein Syncword übersendet,
**dadurch gekennzeichnet,**
**daß** nach dem Aufbau der bidirektionalen Kommunikation das Verbrauchsmeßgerät ein Idword zur Identifikation dieses Verbrauchsmeßgerätes übersendet.

2. Verfahren nach Anspruch 1,
**dadurch gekennzeichnet,**
**daß** das Bestätigungssignal die Dateninhalte festlegt, welche das Verbrauchsmeßgerät senden soll.

3. Verfahren nach einem der vorhergehenden Ansprüche,
**dadurch gekennzeichnet,**
**daß** unterschiedliche Sende- und Empfangsfrequenzen verwendet werden.

4. Verfahren nach einem der vorhergehenden Ansprüche,
**dadurch gekennzeichnet,**
**daß** nach erfolgter Übertragung der Daten von dem Verbrauchsmeßgerät für eine vorgegebene Zeitdauer keine kurzen Funksignale an den Datensammler gesendet werden.

5. Verfahren nach einem der vorhergehenden Ansprüche,
**dadurch gekennzeichnet,**
**daß** von dem Verbrauchsmeßgerät nach dem Senden des kurzen Funksignals erst der Leistungspegel eines Eingangssignals bewertet wird, bevor es auf das Bestätigungssignal des Datensammlers wartet.

6. Verfahren nach Anspruch 5,
**dadurch gekennzeichnet,**
**daß** die Bewertung des Leistungspegels des Eingangssignals dynamisch verändert wird.

7. Verfahren nach einem der vorhergehenden Ansprüche,
**dadurch gekennzeichnet,**
**daß** nach der Montage des Verbrauchsmeßgerätes in einem vorgegebenen Zeitraum der zeitliche Abstand verkürzt wird, mit dem das Verbrauchsmeßgerät die kurzen Funksignale aussendet.

8. Verfahren nach einem der vorhergehenden Ansprüche,
**dadurch gekennzeichnet,**
**daß** nach der Montage des Verbrauchsmeßgerätes in einem vorgegebenen Zeitraum die Sendeleistung und/oder die Empfangsleistung des Verbrauchsmeßgerätes und/oder des Datensammlers verändert wird.

9. Verfahren nach einem der vorhergehenden Ansprüche,
**dadurch gekennzeichnet,**
**daß** in Abhängigkeit von der Empfangsqualität der vom Datensammler empfangenen Daten die maximale Schnelligkeit der Datenübertragung angepaßt wird.

## Claims

1. Method for transmitting the stored data from a battery-operated electronic consumption meter to a data collector by radio,
in which the data collector is temporarily or permanently in receive mode, and
in which a bidirectional radio connection between the consumption meter and the data collector is used to transmit and receive the stored data and/or other data,
in which the consumption meter is in a rest phase for most of the time, in which, although the consumption meter measures and stores data, it is not ready to transmit, in which the consumption meter periodically changes from this rest phase into readiness to transmit and attempts to set up a bidirectional radio connection to the data collector,
in which, if successful, the stored data and/or other data are then completely or partially transmitted to the data collector or data are received from the data collector, and
in which, both if successful and if unsuccessful, the consumption meter finally returns to the rest phase again in any case,
wherein the consumption meter emits a short radio signal at intervals of time from the rest phase and then immediately changes to receive mode for a predefined period in order to set up the bidirectional communication with the data collector, wherein, if the data collector receives the short radio signal from the consumption meter, this data collector then emits a confirmation signal to the consumption meter, wherein, finally, after this confirmation signal has been received by the consumption meter, the latter completely or partially transmits the stored data and/or other data to the data collector and the latter receives the data, and
wherein the short radio signal from the consumption meter transmits a transmission preamble and a sync word,
**characterized**
**in that**, after the bidirectional communication has been set up, the consumption meter transmits an ID word for identifying this consumption meter.

2. Method according to Claim 1,
**characterized**
**in that** the confirmation signal stipulates the data contents which are intended to be transmitted by the consumption meter.

3. Method according to one of the preceding claims,
**characterized**
**in that** different transmission and reception frequencies are used.

4. Method according to one of the preceding claims,
**characterized**
**in that**, after the data have been transmitted, the consumption meter does not transmit any short radio signals to the data collector for a predefined period.

5. Method according to one of the preceding claims,
**characterized**
**in that**, after transmitting the short radio signal, only the power level of an input signal is assessed by the consumption meter before it waits for the confirmation signal from the data collector.

6. Method according to Claim 5,
**characterized**
**in that** the assessment of the power level of the input signal is dynamically changed.

7. Method according to one of the preceding claims,
**characterized**
**in that**, after the consumption meter has been installed in a predefined period, the interval of time at which the consumption meter emits the short radio signals is shortened.

8. Method according to one of the preceding claims,
**characterized**
**in that**, after the consumption meter has been installed in a predefined period, the transmission power and/or the reception power of the consumption meter and/or of the data collector is/are changed.

9. Method according to one of the preceding claims,
**characterized**
**in that** the maximum speed of the data transmission is adapted depending on the reception quality of the data received by the data collector.

## Revendications

1. Procédé de transmission des données mémorisées d'un compteur de consommation électronique fonctionnant sur batterie à un collecteur de données par voie radioélectrique,
avec lequel le collecteur de données se trouve temporairement ou continuellement en mode de réception et avec lequel une liaison radioélectrique bidirectionnelle entre le compteur de consommation et le collecteur de données est utilisée pour l'émission ainsi que pour la réception des données mémorisées et/ou d'autres données,
avec lequel le compteur de consommation se trouve pendant la majorité du temps dans une phase de repos, dans laquelle il mesure certes des données et les mémorise, mais ne se trouve pas à l'état prêt à émettre,
avec lequel le compteur de consommation sort périodiquement de cette phase de repos pour passer à l'état prêt à émettre et essaie d'établir une liaison radioélectrique bidirectionnelle avec le collecteur de données,
avec lequel, en cas de réussite, les données mémorisées et/ou d'autres données sont ensuite entièrement ou partiellement envoyées au collecteur de données ou des données sont reçues par le collecteur de données et
avec lequel, pour terminer, le compteur de consommation retourne dans tous les cas dans la phase de repos, aussi bien en cas de réussite qu'en cas d'échec,
le compteur de consommation, en sortant de la phase de repos à intervalles temporels, émettant un signal radioélectrique court et, immédiatement après, passant en mode de réception pendant une durée prédéfinie en vue d'établir la communication bidirectionnelle avec le collecteur de données, ensuite, dans le cas où le collecteur de données reçoit le signal radioélectrique court du compteur de consommation, ce collecteur de données envoyant un signal de confirmation au compteur de consommation,
pour terminer, après la réception de ce signal de confirmation par le compteur de consommation, celui-ci envoyant les données mémorisées et/ou d'autres données entièrement ou partiellement au collecteur de données et celui-ci recevant les données, et
le signal radioélectrique court du compteur de consommation transmettant un préambule de transmission ainsi qu'un mot de synchronisation **caractérisé en ce**
**qu'**après l'établissement de la communication bidirectionnelle, le compteur de consommation transmet un mot d'identification servant à l'identification de ce compteur de consommation.

2. Procédé selon la revendication 1, **caractérisé en ce que** le signal de confirmation fixe les contenus des données que doit envoyer le compteur de consommation.

3. Procédé selon l'une des revendications précédentes, **caractérisé en ce que** des fréquences d'émission et de réception différentes sont utilisées.

4. Procédé selon l'une des revendications précédentes, **caractérisé en ce qu'**après une transmission réussie des données depuis le compteur de consommation, aucun signal radioélectrique court n'est émis vers le collecteur de données pendant une durée prédéfinie.

5. Procédé selon l'une des revendications précédentes, **caractérisé en ce que** le compteur de consommation, après l'émission du signal radioélectrique court, évalue tout d'abord le niveau de puissance d'un signal d'entrée avant d'attendre le signal de confirmation du collecteur de données.

6. Procédé selon la revendication 5, **caractérisé en ce que** l'évaluation du niveau de puissance du signal d'entrée est modifiée dynamiquement.

7. Procédé selon l'une des revendications précédentes, **caractérisé en ce qu'**après le montage du compteur de consommation, l'intervalle de temps auquel le compteur de consommation émet les signaux radioélectriques courts est raccourci pendant une période prédéfinie.

8. Procédé selon l'une des revendications précédentes, **caractérisé en ce qu'**après le montage du compteur de consommation, la puissance d'émission et/ou la puissance de réception du compteur de consommation et/ou du collecteur de données est modifiée pendant une période prédéfinie.

9. Procédé selon l'une des revendications précédentes, **caractérisé en ce que** la vitesse maximale de la transmission de données est adaptée en fonction de la qualité de réception des données reçues par le collecteur de données.
